# EUROPÄISCHE PATENTANMELDUNG

(11) **EP 2 667 135 A1**
(43) Veröffentlichungstag der Anmeldung: **27.11.2013**
(21) Anmeldenummer: 12005614.8
(22) Anmeldetag: 02.08.2012
(51) Int. Cl.: F28D 7/02, F22B 1/00, F03G 6/06, F01K 25/08, F22B 1/06, F22B 1/16, F28D 7/08

(54) **Verfahren zum Wärmeaustausch zwischen einer Salzschmelze und einem weiteren Medium in einem gewickelten Wärmetauscher**

(30) Priorität: 24.05.2012 DE 102012010311
(71) Anmelder: Linde Aktiengesellschaft, 80331 München (DE)
(72) Erfinder: Adametz, Helgo, 83308 Trostberg (DE); Deichsel, Florian, 81373 München (DE); Kerber, Christiane, Dr., 82343 Pöcking (DE); Müller-Thorwart, Ole, 82223 Eichenau (DE); Steinbauer, Manfred, 82399 Raisting (DE); Reiter, Norbert, 83308 Trostberg (DE)

(57) **Zusammenfassung**

Die Erfindung betrifft ein Verfahren zum indirekten Wärmeaustausch zwischen einer Salzschmelze (2, 2') als erstem Wärmeträger und mindestens einem zweiten Wärmeträger (15, 15'). Erfindungsgemäß wird zum Wärmeaustausch zwischen der Salzschmelze (2, 2') und dem zweiten Wärmeträger (15, 15') zumindest ein gewickelter Wärmeaustauscher (5) eingesetzt.

## Beschreibung

Die Erfindung betrifft ein Verfahren zum indirekten Wärmeaustausch zwischen einer Salzschmelze als erstem Wärmeträger und mindestens einem zweiten Wärmeträger wie Thermoöl. Salzschmelzen werden beispielsweise in Solarthermiekraftwerken als Wärmeträger eingesetzt.

Hierbei ist unter einem Wärmeträger ein flüssiges, gasförmiges oder überkritisches Medium zu verstehen, das an einer Stelle des Kraftwerksprozesses eine Wärmemenge aufnimmt bzw. abgibt, die es an anderer Stelle des Kraftwerksprozesses oder außerhalb dieses wieder abgibt bzw. aufnimmt. In diesem Sinne ist auch ein Arbeitsmedium als Wärmeträger anzusehen, dem im Kraftwerksprozess thermische Energie zugeführt wird, um diese in mechanische Arbeit umzusetzen.

In Solarthermiekraftwerken wird aus Sonnenenergie über einen thermodynamischen Kreisprozess elektrischer Strom erzeugt. Hierbei wird aus einem in einem Dampfkreislauf zirkulierenden Arbeitsmedium (z. B. Wasser oder Ammoniak) überhitzter Dampf erzeugt, der nachfolgend in einer mit einem Stromgenerator gekoppelten Dampfturbine arbeitsleistend entspannt wird. Dem Arbeitsmedium kann dabei direkt über die Sonnenstrahlung oder indirekt über einen Wärmeträger (z.B. Thermoöl, Salzschmelze) Wärme zugeführt werden, der seinerseits über konzentriertes Sonnenlicht erhitzt wird. Zur Ausdehnung der Stromerzeugung in Zeiten, in denen keine Sonne scheint oder zum Ausgleich von wolkenbedingten Schwankungen der Sonneneinstrahlung, kann ein Teil der eingestrahlten Sonnenwärme mit Hilfe des selben (direkt) oder eines anderen Wärmeträgers (indirekt) zwischengespeichert werden. Üblicherweise werden zur Wärmespeicherung Salzschmelzen (typischerweise eutektische Mischungen aus KNO₃ und NaNO₃) eingesetzt, die direkt oder über einen anderen Wärmeträger, wie beispielsweise Thermoöl, indirekt auf Temperaturen zwischen 250-400°C bzw. 600°C aufgeheizt und in Flachbodentanks gespeichert werden, und die ihre Wärme direkt oder indirekt an das Arbeitsmedium abgeben.

Zur Wärmeübertragung zwischen einer Salzschmelze und einem weiteren Wärmeträger werden üblicherweise Rohrbündelwärmetauscher, sog. STHEs (abgeleitet von der englischen Bezeichnung Shell and Tube Heat Exchangers) eingesetzt. Aufgrund der großen zu übertragenden Wärmemengen bei geringen Temperaturdifferenzen zwischen den Wärme austauschenden Wärmeträgern werden mehrere STHEs in Reihe geschaltet. In bestehenden Anlagen (Andasol 1 bzw. 2) sind beispielsweise sechs Tauscher für das Be- und Entladen der Salzschmelzespeicher angeordnet. Bei noch höheren zu übertragenden Wärmemengen müssen parallele Stränge aufgebaut werden. Dies führt zu hohen Investitionskosten und zusätzlichen Effizienzverlusten bei der Wärmeübertragung.

Die bisher eingesetzten STHEs weisen zudem aufgrund ihrer Bauart eine geringe Flexibilität hinsichtlich der Temperaturänderungen beim An- und Abfahren des Kraftwerks bzw. beim Be- und Entladen des Wärmespeichers auf, was zu einer erhöhten Reaktionszeit im Falle von Lastschwankungen und, daraus resultierend, zu Schwierigkeiten bei der Anpassung an die Erfordernisse des Stromnetzes führt.

Aufgabe der vorliegenden Erfindung ist es daher, ein Verfahren der eingangs genannten Art anzugeben, mit dem die Nachteile des Standes der Technik überwunden werden.

Diese Aufgabe wird gelöst durch ein Verfahren nach Anspruch 1. Die abhängigen Ansprüche 2 bis 8 beziehen sich auf bevorzugte Ausführungsformen.

Demnach wird ein Verfahren zum indirekten Wärmeaustausch zwischen einer Salzschmelze als erstem Wärmeträger und mindestens einem zweiten Wärmeträger, wie beispielsweise Thermoöl oder Wasser bzw. Wasserdampf, bereitgestellt. Erfindungsgemäß werden die Salzschmelze und der zweite Wärmeträger zum Wärmeaustausch durch zumindest einen gewickelten Wärmeaustauscher geführt.

Gewickelte Wärmetauscher, sog. CWHEs (abgeleitet von der englischen Bezeichnung Coil-Wound Heat Exchangers) sind spezielle Typen von Wärmetauschern, die gegenwärtig in verschiedenen großtechnischen Prozessen, wie beispielsweise der Methanolwäsche, der Erdgasverflüssigung oder in der Ethylenerzeugung eingesetzt werden. Ein gewickelter Wärmetauscher weist eine Mehrzahl von Rohren auf, die in mehreren Lagen um ein zentrales Kernrohr gewickelt sind. Die Rohre sind von einem Mantel umgeben, der einen Außenraum um die Rohre, im Weiteren als Mantelraum bezeichnet, begrenzt. Des Weiteren sind die Rohre meist in Lochböden an den Enden des Wärmeaustauschers in ein oder mehreren Bündeln zusammengeführt und mit Stutzen am Mantel des Wärmetauschers verbunden. Die Rohre des Wärmeaustauscher können somit mit einem einzigen Wärmeträgerstrom (einströmig) oder mehreren separaten Wärmeträgerströmen (mehrströmig) beaufschlagt werden. Durch den Mantelraum des Wärmetauschers strömt ein mantelseitiger Wärmeträger, der mit dem einen oder den mehreren rohrseitigen Wärmeträgerströmen in Wärmeaustausch tritt.

Gegenüber STHEs besitzen CWHEs ein größeres Verhältnis von Wärmeübertragungsfläche zu Bauvolumen, weshalb sie kompakter sind. Des Weiteren sind sie auch robuster und flexibler im Betrieb. Durch die günstige Strömungsführung mit hohen Strömungsgeschwindigkeiten und damit hohen Wärmeübertragungskoeffizienten sind CWHEs auch für Anwendungen geeignet, bei denen die wärmeaustauschenden Wärmeträger geringe Temperaturunterschiede aufweisen. Mit CWHEs können große Differenzen zwischen der Eingangstemperatur und Ausgangstemperatur eines jeweiligen Wärmeträgers erreicht werden. Ein weiterer Vorteil von CWHEs ist, dass diese sowohl mantelseitig als auch rohrseitig selbstentleerend ausgeführt werden können. Dies ist für die Anwendung mit Salzschmelzen wichtig, da erstarrtes Salz innerhalb des Wärmetauschers nicht wieder aufgeschmolzen werden kann. Zudem sind CHWEs unempfindlich gegenüber hohen Temperaturlastwechseln, die in Solarthermieanlagen, die Salzschmelzen verwenden, täglich auftreten.

Vorzugsweise wird die Salzschmelze durch den Mantelraum des gewickelten Wärmeaustauschers geleitet. Die Temperatur der Salzschmelze liegt bevorzugt in einem Bereich zwischen etwa 250°C bis etwa 600°C, besonders bevorzugt in Bereichen zwischen etwa 250°C bis etwa 400°C oder in Hochtemperaturanwendungen zwischen etwa 550°C bis etwa 600°C.

Der zweite oder weitere Wärmeträger, wie beispielsweise eine weitere Salzschmelze, Wasser, Wasserdampf, Ammoniak, überkritisches Kohlendioxid oder Thermoöl wird bzw. werden vorzugsweise durch die Rohre des gewickelten Wärmeaustauschers geleitet. Rohrseitig besteht demnach die Möglichkeit bei einem mehrströmigen, gewickelten Wärmeaustauscher mehrere verschiedene Wärmeträger getrennt voneinander durch die Rohre des Wärmetauschers zu leiten.

Bei einigen Anwendungen wird es notwenig sein, zur Übertragung einer definierten Wärmemenge zwischen der Salzschmelze und dem zweiten Wärmeträger mehrere gewickelte Wärmeaustauscher parallel zueinander angeordnet einzusetzen.

Eine bevorzugte Variante des erfindungsgemäßen Verfahrens sieht jedoch vor, dass die gesamte zwischen den beiden Wärmeträgern zu übertragende Wärmemenge über nicht mehr als zwei CWHEs ausgetauscht wird. Vorzugsweise sollen in einem CWHE mehrere Wärmübertragungsschritte, wie beispielsweise die Anwärmung und/oder die Verdampfung und/oder die Überhitzung eines Wärmeträgers wie beispielsweise Wasser bzw. Dampf durchgeführt werden.

Eine besonders bevorzugte Variante des erfindungsgemäßen Verfahrens sieht vor, dass die gesamte zwischen den beiden Wärmeträgern zu übertragende Wärmemenge über genau einen CWHE ausgetauscht wird.

Das erfindungsgemäße Verfahren ist besonders vorteilhaft in Solarthermiekraftwerken anwendbar, da sich aufgrund der mechanischen Einfachheit der CWHEs der Wärmespeicher eines Solarthermiekraftwerks erheblich kompakter gestalten, als dies nach dem Stand der Technik möglich ist, was zu deutlich geringeren Investitionskosten führt.

Im Folgenden soll die Erfindung anhand von Ausführungsbeispielen näher erläutert werden. Die Figuren zeigen:
- Figur 1: eine schematischen Darstellung zweier Verfahren zum indirekten Wärmeaustausch zwischen einer Salzschmelze als erstem Wärmeträger und einem zweiten Wärmeträger mithilfe eines gewickelten Wärmetauschers in einem Solarthermiekraftwerk;
- Figur 2: den gewickelten Wärmeaustauscher aus Fig. 1 in einer perspektivischen und teilweise aufgeschnittenen Ansicht.

### Erstes Beispiel:

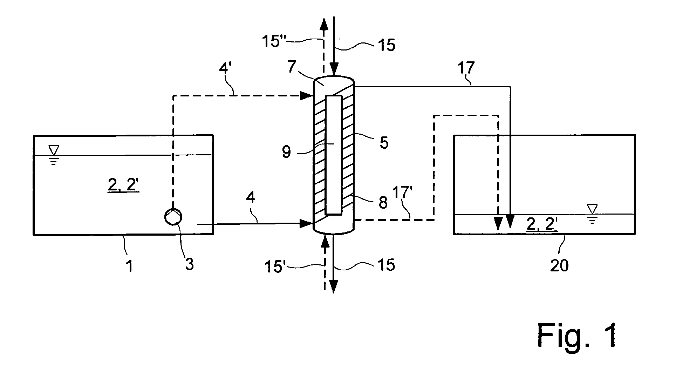

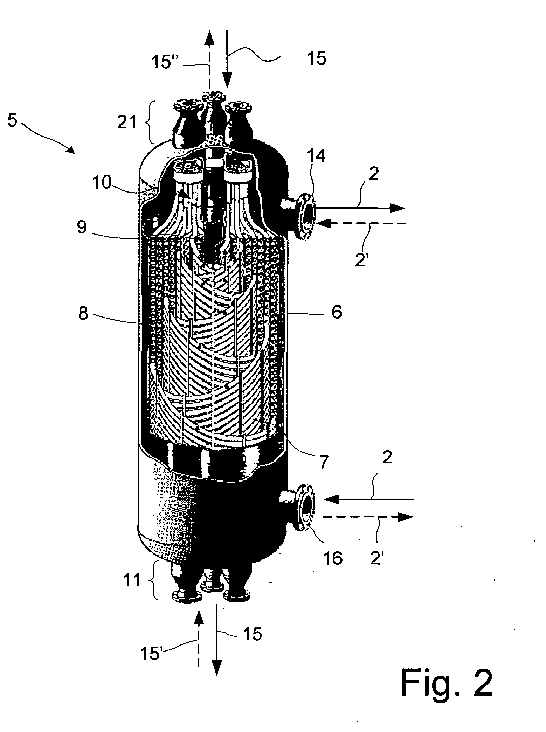

Die Führung der Wärmeträger des ersten Beispiels ist in den Fig. 1 und 2 in durchgehenden Linien eingezeichnet. Aus dem Speichertank 1 wird als erster Wärmeträger Salzschmelze 2 mit einer Temperatur von etwa 300°C entnommen und über eine Leitung 4 einem gewickelten Wärmetauscher 5, der in einer perspektivischen Ansicht in Fig. 2 gezeigt ist, zugeführt.

Der in Fig. 2 gezeigte gewickelte Wärmetauscher 5 weist einen Mantel 6 auf, der einen Mantelraum 7 innerhalb des Wärmetauschers 5 umgibt. Innerhalb des Mantelraums 7 befinden sich eine Mehrzahl von Rohre 8, die in mehreren Lagen um ein zentrales Kernrohr 9 gewickelt sind. Der in der Fig. 2 dargestellte Wärmetauscher 5 weist drei Bündel 10 von Rohren auf, die jeweils über separate Stutzen 11 bzw. 21 mit Fluiden beaufschlagt werden können. Für die vorliegende Anwendung reicht jedoch eine einströmige Ausführung mit einem einzigen Bündel 10 von Rohren aus. Die jeweils drei vorhandenen Bündel 10, Stutzen 11 bzw. 21 sind durch jeweils ein Bündel 10, einen Stutzen 11 am unteren Ende des Wärmetauschers 5 und einen Stutzen 21 am oberen Ende des Wärmeaustauschers ersetzt zu betrachten. Von einer einströmigen Ausführung wird daher in der folgenden Beschreibung ausgegangen.

Über einen Stutzen 16 am unteren Ende des Wärmetauschers wird über die Leitung 4 die Salzschmelze 2 in den Mantelraum 7 des Wärmetauschers 5 eingeleitet. Am oberen Ende des Wärmetauschers 5 wird als zweiter Wärmeträger 15 Thermoöl mit einer Temperatur von etwa 400°C über den Stutzen 21 in die Rohre 8 des gewickelten Wärmetauschers 5 eingeleitet. Hierbei tritt das in den Rohren 8 fließende heiße Thermoöl 15 in indirekten Wärmetausch mit der im Mantelraum 7 fließenden Salzschmelze 2, die dabei erwärmt wird. Die erwärmte Salzschmelze 2 verlässt den Mantelraum 7 des Wärmeaustauschers 5 mit einer Temperatur von etwa 400°C über einen Stutzen 14 am oberen Ende des Wärmeaustauschers 5 und wird wie in Fig. 1 dargestellt über eine Leitung 17 in einen zweiten Speichertank 20 eingeleitet. Die erwärmte Salzschmelze 2 kann aus dem Speichertank 20 zur weiteren Verwendung entnommen werden. Das auf eine Temperatur von etwa 300°C abgekühlte Thermoöl 15 verlässt den Wärmeaustauscher 5 an seinem unteren Ende über den Stutzen 11.

### Zweites Beispiel:

Die Führung der Wärmeträger des zweiten Beispiels ist in den Fig. 1 und 2 in unterbrochenen Linien eingezeichnet. Die Salzschmelze 2' wird mithilfe einer Pumpe 3 aus dem Speichertank 1 über die Leitung 4' zum Wärmeaustauscher 5 gefördert. Am oberen Ende des Wärmetauschers 5 wird die Salzschmelze 2' über den Stutzen 14 in den Mantelraum 7 des Wärmetauschers 5 mit einer Temperatur in einem Bereich zwischen 250°C und 600°C, in der Regel von 250°C bis 400°C oder in Hochtemperaturanwendungen auch in einem Bereich zwischen 550°C und 600°C eingeleitet. Die Salzschmelze 2' tritt mit Wasser 15', das am unteren Ende des Wärmetauschers 5 über den Stutzen 11 in die Rohre 8 eingeleitet wird, in indirekten Wärmeaustausch. Das Wasser 15' wird beim Durchströmen der Rohre 8 zunächst angewärmt, verdampft und schließlich überhitzt, bevor es als überhitzter Wasserdampf 15" den gewickelten Wärmetauscher 5 über den Stutzen 21 verlässt und nachfolgend einer nicht dargestellten Dampfturbine zugeführt wird. Die in dem Wärmetauscher 5 abgekühlte Salzschmelze 2' verlässt den Mantelraum 7 des Wärmetauschers 5 über den Stutzen 16 und wird über die Leitung 17' in den Speichertank 20 geführt. Von dort aus kann die Salzschmelze 2' durch direkte oder indirekte Zuführung von Sonnenenergie wieder aufgeheizt werden, um dann erneut zum Wärmetausch im Wärmetauscher 5 zur Verfügung zu stehen.

## Patentansprüche

1. Verfahren zum indirekten Wärmeaustausch zwischen einer Salzschmelze (2, 2') als erstem Wärmeträger und mindestens einem zweiten Wärmeträger (15, 15'), **dadurch gekennzeichnet, dass** die Salzschmelze (2, 2') und der zweite Wärmeträger (15, 15') durch zumindest einen gewickelten Wärmeaustauscher (5) geleitet werden.

2. Verfahren nach Anspruch 1, **dadurch gekennzeichnet, dass** die Salzschmelze (2, 2') durch den Mantelraum (7) des gewickelten Wärmeaustauschers (5) geleitet wird.

3. Verfahren nach Anspruch 1 oder 2, **dadurch gekennzeichnet, dass** die Temperatur der Salzschmelze in einem Bereich zwischen etwa 250°C bis etwa 600°C, insbesondere in Bereichen zwischen etwa 250°C bis etwa 400°C oder etwa 550°C bis etwa 600°C liegt.

4. Verfahren nach einem der vorangehenden Ansprüche, **dadurch gekennzeichnet, dass** der zweite Wärmeträger (15, 15') oder weitere Wärmeträger durch die Rohre (8) des gewickelten Wärmeaustauschers (5) geleitet wird bzw. werden.

5. Verfahren nach einem der vorangehenden Ansprüche, **dadurch gekennzeichnet, dass** der zweite Wärmeträger (15, 15') oder weitere Wärmeträger eine Salzschmelze, Wasser, Dampf, Ammoniak, überkritisches Kohlendioxid oder Thermoöl ist.

6. Verfahren nach einem der vorangehenden Ansprüche, **dadurch gekennzeichnet, dass** die gesamte zwischen der Salzschmelze (2, 2') und dem zweiten Wärmeträger (15, 15') zu übertragende Wärmemenge in mehreren parallel zueinander angeordneten gewickelten Wärmeaustauschern ausgetauscht wird.

7. Verfahren nach einem der vorangehenden Ansprüche, **dadurch gekennzeichnet, dass** die gesamte zwischen der Salzschmelze (2, 2') und dem zweiten Wärmeträger (15, 15') zu übertragende Wärmemenge über nicht mehr als zwei gewickelte Wärmetauscher (5) ausgetauscht wird.

8. Verfahren nach einem der Ansprüche 1 bis 5 oder 7, **dadurch gekennzeichnet, dass** die gesamte zwischen der Salzschmelze (2, 2') und dem zweiten Wärmeträger (15, 15') zu übertragende Wärmemenge über genau einen gewickelten Wärmetauscher (5) ausgetauscht wird.

9. Verwendung eines Verfahrens nach einem der vorangehenden Ansprüche in einem Solarthermiekraftwerk.
